(19) Europäisches Patentamt
European Patent Office
Office européen des brevets

(11) Publication number: 0 019 985
B1

(12) # EUROPEAN PATENT SPECIFICATION

(45) Date of publication of patent specification: 23.11.83

(51) Int. Cl.³: C 10 M 3/28, C 09 K 15/18, C 09 K 15/20, C 09 K 15/24

(21) Application number: 80200512.4

(22) Date of filing: 30.05.80

(54) **A method for stabilizing a lubricating oil.**

(30) Priority: 31.05.79 US 43995

(43) Date of publication of application:
10.12.80 Bulletin 80/25

(45) Publication of the grant of the patent:
23.11.83 Bulletin 83/47

(84) Designated Contracting States:
DE FR GB IT NL

(56) References cited:
US - A - 3 579 582
US - A - 3 822 284

CHEMICAL ABSTRACTS, vol. 63, no. 4, 16th August, 1965, ref. 4191c, COLUMBUS, OHIO (US), G.F. BEBIKH et al.: "Synthesis of N-substituted aromatic amines"

(73) Proprietor: UNIROYAL, INC.
1230 Avenue of the Americas Rockefeller Center
New York, New York 10020 (US)

(72) Inventor: Bandlish, Baldev Kumar
112 Joy Road
Middlebury, New Haven Connecticut 06762 (US)
Inventor: Loveless, Frederick C.
184 Towpath Lane
Cheshire, New Haven Connecticut 06410 (US)
Inventor: Nudenberg, Walter
Rt. 3 Taunton Road
Newtown, Fairfield Connecticut 06470 (US)

(74) Representative: Kupecz, Arpad et al,
Octrooibureau Los en Stigter B.V. Postbox 20052
NL-1000 HB Amsterdam (NL)

EP 0 019 985 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A method for stabilizing a lubricating oil

Advanced automotive, aircraft and other industrial equipment require lubricating oils that are effective at elevated temperatures. Polyesters, polyolefins, polyglycols, polyphenyl ethers, phosphates, silicones, etc. have been used as suitable lubricating oils. These lubricating oils undergo oxidative degradation at elevated temperatures. Loss of lubricating properties due to oxidative breakdown of these oils may cause failure of a part, or parts, in contact with the oils. The prior art discloses the stabilization of lubricating oils using various amines including diphenyl- and substituted diphenylamines, p-phenylenediamine and substituted naphthylamine. There appears to be no recognition of the use of secondary amines wherein one of the groups attached the amino nitrogen is an aromatic or substituted aromatic ring and the other group is an aliphatic carbon which in turn is attached to an aromatic or substituted aromatic ring.

U.S. Patent 1,469,245 discloses N-(o-Hydroxybenzyl)-N′-phenyl-p-phenylene diamine as an antidegradant for rubber. This compound belongs to the class of phenylene diamines which are known antioxidants. Furthermore, its use as a stabilizer for lubricating oils is neither disclosed in that patent, nor elsewhere.

U.S. Patent No. 2,108,147 teaches a method for preparing secondary and tertiary amines including 1-anilino-1-phenylethane. Hickenbottom teaches a phenylamine compound designated as alpha-phenylethyl-p-toluidine; see *Journal of the Chemical Society* (1934) pages 319—322. Beilstein discloses a phenyl amine compound of the general formula

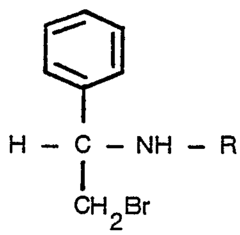

wherein R can be phenyl; see *Handbuch Der Organishen Chemie* 4th Ed., Vol XII Pat. IV pages 2403—4. None of the aforegoing compounds are taught to be antioxidants.

From Chemical Abstracts, Vol. 63, No. 4, 16th August 1965, ref. 4191c Columbus, Ohio (US), G.F. Bebikh et al.: "Synthesis of N-substituted aromatic amines" a compound (N-$\alpha$-methylbenzyl-p-anisidine) is known.

It has been found that certain amino compounds are effective as antioxidants. These amino compounds have the formula

(I) 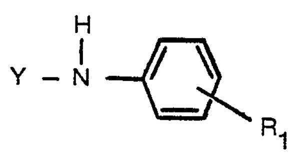

wherein Y is:

(II) 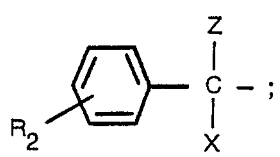 or 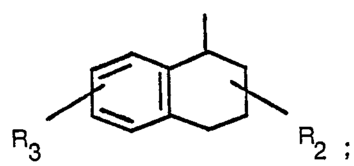 (III)

wherein $R_1$ and $R_3$ are each independently selected from the group consisting of H, $C_1$—$C_{12}$ alkyl, $C_1$—$C_{12}$ alkoxy, $C_2$—$C_{18}$ alkoxycarbonyl, halogen and nitro; $R_2$ is selected from the group consisting of H, $C_1$—$C_{12}$ alkyl, $C_1$—$C_{12}$ alkoxy, $C_2$—$C_{18}$ alkoxycarbonyl, halogen, nitro and amino; Z and X are selected from H or $C_1$—$C_3$ alkyl, provided, however, that both Z and X are not simultaneously H.

In its embodiment the antioxidants are used in conjunction with a metal deactivator and a metal or metal salt. The metal salts are soluble in the lubricating oil, e.g., metal naphthenates.

This invention relates to a method of stabilizing lubricating oils against oxidation and sludge formation. In particular this invention relates to a method for stabilizing such oils utilizing phenylated benzylamines or phenylated tetrahydro naphthylamines, which may be substituted or unsubstituted, or in conjunction with a metal deactivator and a metal compound. This stabilizer system provides a surprisingly high degree of resistance to oxidative breakdown of lubricating oils as well as resulting in dramatic reductions in sludge formation. Certain of the phenylated benzylamines and phenylated tetrahydro naphthylamines used in the practice of this invention are novel compounds.

The method of this invention for stabilizing a lubricating oil comprises utilizing as a stabilizer system: (A) An amine of the formula

(I) 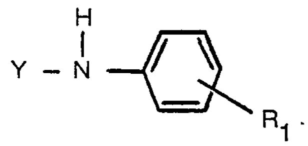

wherein Y is:

(II) 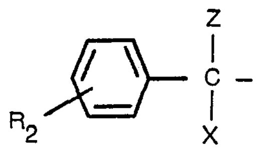 ; or 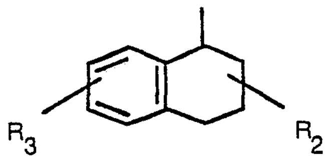 ; (III)

wherein $R_1$ and $R_3$ are each independently selected from the group consisting of H, $C_1$—$C_{12}$ alkyl, $C_1$—$C_{12}$ alkoxy, $C_2$—$C_{18}$ alkoxycarbonyl, halogen and nitro; $R_2$ is selected from the group consisting of H, $C_1$—$C_{12}$ alkyl, $C_1$—$C_{12}$ alkoxy, $C_2$—$C_{18}$ alkoxycarbonyl, halogen, nitro and amino; Z and X are selected from H or $C_1$—$C_3$ alkyl, provided, however, that both Z and X are not simultaneously H;
(B) A metal deactivator, and
(C) A metal or metal salt, said metal salt being soluble in the lubricating fluid.

Illustrative non-limiting examples of the antioxidants are
N-(*alpha*-methyl-*p*-octyl benzyl)aniline;
N-(*alpha*-methyl-p-nonyl benzyl)aniline;
N-(*alpha*-methyl benzyl)-*p*-nonylaniline;
N-(*alpha*-methyl benzyl)-*p*-dodecylaniline;
N-(*alpha*-methyl benzyl)-*p*-methoxyaniline;
N-(*alpha*-methyl benzyl)-*m*-methoxyaniline;
N-(*alpha*-methyl benzyl)-*o*-methoxyaniline;
N-(*alpha*-methyl benzyl)-*m*-carbethoxyaniline;
N-(*alpha*-methyl benzyl)-*o*-carbethoxyaniline;
N-(*alpha*-methyl benzyl)-*p*-chloroaniline;
N-(*alpha*-methyl benzyl)-*m*-chloroaniline;
N-(*alpha*-methyl benzyl)-*o*-chloroaniline;
N-(alpha,alpha-dimethylbenzyl)aniline;
1-(*p*-dodecylanilino)-1,2,3,4-tetrahydronaphthalene;
1-(*p*-carbethoxyanilino)-1,2,3,4-tetrahydronaphthalene;
N-(*p*-acetyl-*alpha*-methyl benzyl)aniline; and
1,4-bis-(1-anilinoethyl)benzene.

The preferred antioxidants of this invention are
N-(*alpha*-methyl-*p*-octylbenzyl)aniline and
N-(*alpha*-methyl benzyl)-*p*-nonylaniline.

Addition of the amines described above to lubricating oils imparts an unexpectedly high degree of resistance to oxidative breakdown.

The amines of this invention are useful in stabilizing a wide range of lubricating oils including polyester oils, mineral oils and synthetic hyrdocarbon oils. The stabilizer system of this invention is particularly effective for use in polyolester lubricating oils.

The polyolester lubricating oils for which the stabilizer systems of this invention are suitable are synthetic lubricants based upon one or more organic carboxylic acid esters. Illustrative examples of such oils are diesters such as dioctyl sebacate or dinonyl adipate prepared by the reaction of a dibasic acid and a monohydric alcohol; triesters such as trimethylolpropane tripelorgonate or trimethylolpropane tricaprilate prepared by the reaction of trimethylol propane and a monobasic acid; tetraesters such as pentaerythritol tetracaprilate prepared by the reaction of pentaerythritol and a monobasic acid; esters of trimethylolpropane or pentaerythritol prepared by reaction with mixtures of monobasic acids; or complex esters prepared by reacting mixtures of monobasic acids, dibasic acids and polyhydric alcohols.

The synthetic hydrocarbon oils to which the stabilizer system of this system of this invention may be added are oligomers of alpha olefins. The preferred alpha olefins are $C_3$—$C_{14}$ alpha-olefins. Normally, these hydrocarbon oils have a number average molecular weight of 280 to 2,000; preferably 350 to 1,500. These lubricating oils have low unsaturation preferably having an iodine number of less than 3.

The term "antioxidant" when used in the specification means the substituted phenylated amines and substituted tetrahydronaphthylamines of this invention. The term "stabilizer system" as used in the specification and claims means the aforegoing antioxidants in conjunction with a metal compound and a metal deactivator.

The metal may be present either as the free metal or a salt of a metal. The salt must be soluble in the lubricating oil and is preferably an organometallic salt.

The preferred salts include naphthenates, stearates, acetylacetonates, octoates, decanoates etc.

The metal deactivators useful in the practice of this invention are benzotriazole and benzotriazole derivatives. The benzotriazole derivative can be alkyl substituted or dialkyl amino alkyl substituted; preferably dialkyl amino alkyl substituted. Substitution is on the secondary nitrogen of the triangle. The alkyl group can be a $C_1$ to $C_{20}$ alkyl and each alkyl may be the same or different than the others. Preferably the alkyl groups are selected to give the benzotriazole derivative sufficient oil solubility to be incorporated into the lubricant in an effective amount e.g. $C_6$—$C_{12}$ alkyl. Typical of such compounds is Reomet 38 (Trade Mark) marketed by Ciba Geigy Co. The term "metal deactivator" as used in the specification and claims means a compound which when added to a lubricant will neutralize the catalytic effect of metals e.g. copper in promoting oxidation.

The various components of the antioxidant system which may be added in any order are used in the following amounts. The antioxidant of this invention is used in amounts varying from 0.5 to 5.0 parts by weight per 100 parts of the oil, preferably, 1.0 to 4.0 parts; more preferably 2.0 to 2.5 parts. The metal deactivators can be used in amounts of 0.05 to 1.0 part by weight per 100 parts of the oil, preferably, 0.1 to 0.3 part. Metal or metal salts are used in the amounts of 1 to 25 parts of metal by weight per million parts of the oil; preferably 2 to 10 parts. The preferred metal is copper.

The criteria used herein to evaluate the effectiveness of an antioxidant for lubricating oils are:

1) the amount of sludge produced,
2) the change in initial viscosity,
3) the change in neutralization number; and,
4) the weight change of the test metals.

These criteria are determined after the oil containing the antioxidant system of this invention has been aged for 72 hours at 188°C (370°F) or after the oil containing the antioxidant system has been aged for 48 hours at 218°C (425°F).

The benefits of the antioxidants and stabilizers of this invention may be more readily appreciated by reference to the following examples. The term "polyolester" as used in the specification and claims means a polyester prepared from a polyol by reacting the polyol with a stoichiometric equivalent of mono basic acids.

## EXAMPLE 1

This example shows the unexpected ability of the antioxidant of the present invention to protect polyester based lubricating oils agains oxidative degradation. The oil used was a commercially available polyolester fluid, Hercolube A (Trade Mark) (marketed by Hercules Inc.) and believed to be one prepared from pentaertythritol and a mixture of monocarboxylic acid, e.g., valeric acid and pelargonic acid.

Experiments were carried out in order to evaluate the effectiveness of the antioxidant. The oil sample used in runs B and C was prepared by adding N-(*alpha*-methylbenzyl) aniline in the amount set forth in Table I to 100 grams of the polyolester based oil. Sample D was similarly prepared containing phenyl *alpha*-naphthylamine, a commercially available stabilizer. The amounts used in each case are set forth in Table I.

Each of the samples was tested according to the following test procedures:

A 100 ml. sample having the compositions set forth in Table I is poured into a Pyrex glass (Trade Mark) test cell and aged by inserting one end of a glass air delivery tube into the test cell while the remaining 25 ml. portions of each original oil sample is set aside and analyzed for neutralization number and Kinematic Viscosity in $mm^2/s$ at 37.8°C (100°F). Around this glass air delivery tube immersed in the oil was placed from zero to four metal washers (Mg, Cu, Ag, and Fe) as identified in Table I. When more than one washer was used, they were separated from each other by glass spacers. These remained in the oil during the aging process and served to indicate the extent of corrosion of the oil oxidative decomposition products on the metal. The test cell was then fitted with a reflux condenser. The assembly was placed in a constant temperature aluminum block. An air hose was then attached to the other end of the air delivery tube and the air flow was adjusted so that five liters of air per hour was bubbled through the oil. This aging test was carried out for 48 hours at 218°C (425°F). After aging, the oil was filtered hot and the amount of sludge developed was collected and was determined and recorded in milligrams per 100 ml. of the oil. The filtered oil was then analyzed to determine changes in neutralization number and Kinematic Viscosity at 37.8°C (100°F).

The neutralization number was determined by the color-indicator titration method according to ASTM Procedure D974—55T.

The Kinematic Viscosity was determined according to ASTM Procedure D445—53T.

The metal washers, which were weighed initially, were then carefully washed and weighed again to determine the weight change in grams.

The data in Table I dramatically show that when an amine such as N-(*alpha*-methylbenzyl) aniline is added to a polyolester based lubricating oil the aged properties of oil Samples B and C are excellent as noted by very little change in the viscosity or neutralization number, very low sludge and essentially

no weight change in the metals. The amine antioxidant of the present invention clearly provides better all round protection than a commercially available stabilizer (Sample D).

It should be noted that Sample C, wherein the test was conducted in the presence of copper, was slightly more deteriorated than Sample B, where no copper was present.

TABLE I

| RUN # | OIL[1] | STABILIZER SYSTEM | GRAMS OF STABILIZER | % $V_{100}$[2] | N.N.[3] | SLUDGE (in mg.) |
|---|---|---|---|---|---|---|
| A | 100 | — | — | 94.9[4] | 26.2 | Undetermined |
| B | 100 | 5 | 2.0 | 13.68 | 2.7 | 5.1 |
| C | 100 | 5 | 2.0 | 18.81 | 2.64 | 19.7 |
| D | 100 | 6 | 2.0 | 31.5 | 2.2 | 135.7 |

TABLE I (con't.)

| | | WEIGHT CHANGE (in grams) OF WASHERS | | | |
|---|---|---|---|---|---|
| RUN # | OIL[1] | Mg | Fe | Cu | Ag |
| A | 100 | −0.1366 | −0.0052 | −0.0091 | −0.0001 |
| B | 100 | −0.0001 | +0.0003 | * | −0.0017 |
| C | 100 | +0.0001 | −0.0004 | −0.0011 | −0.0001 |
| D | 100 | −0.0130 | 0.0000 | −0.0024 | −0.0001 |

* no metal included

*LEGEND:*
1. Oil — Commercially available, Hercolube A (Trade Mark).
2. %/$V_{100}$ — Percent change in viscosity at 37.8°C (100°F).
3. N.N. — Neutralization Number of aged oil.
4. Aged oil was so viscous that it could not be completely filtered to determine the amount of sludge formed. Neutralization number and viscosity of the aged oil are actually the properties of a small sample that could be filtered.
5. N-(*alpha*-methylbenzyl)aniline
6. Phenyl-*alpha*-naphthylamine

EXAMPLE II

This example demonstrates the effect of the addition of and changes in the levels of a metal deactivator such as Reomet-38 (Trade Mark), a benzotriazole derivative marketed by Ciba Geigy Co., on the stabilization of a polyolester based lubricating oil which the level of N-(*alpha*-methylbenzyl)aniline and copper are maintained constant. The samples were prepared as in EXAMPLE I.

The data in Table II shows that the addition of Reomet-38 at the levels tested is effective in controlling viscosity change, neutralization number change and sludge formation. The data further demonstrates that the addition of Reomet-38 (Trade Mark) dramatically controls the weight loss of the copper washer.

The data in Table II also shows that the addition of even low levels of the metal deactivator (samples B and C) provide better protection than when no deactivator is used (sample A).

TABLE II

| SAMPLE[1] | ANTIOXIDANT[2] (grams) | R—38[3] (grams) | % $V_{100}$ | N.N. | SLUDGE (mg) |
|---|---|---|---|---|---|
| A | 2.0 | 0.00 | 18.81 | 2.64 | 19.7 |
| B | 2.0 | 0.07 | 12.04 | 1.65 | 5.2 |
| C | 2.0 | 0.08 | 6.99 | 1.66 | 6.5 |
| D | 2.0 | 0.30 | 7.61 | 1.60 | 6.7 |
| E | 2.0 | 0.50 | 18.42 | 4.20 | 9.2 |

TABLE II (Con't.)

| | WEIGHT CHANGE (in grams) OF WASHERS | | | |
|---|---|---|---|---|
| SAMPLE[1] | Mg | Fe | Cu | Ag |
| A | +0.0001 | +0.0004 | −0.0011 | +0.0001 |
| B | +0.0001 | 0.0000 | −0.0004 | 0.0000 |
| C | 0.0000 | 0.0000 | −0.0003 | −0.0004 |
| D | 0.0000 | +0.0003 | −0.0001 | −0.0002 |
| E | −0.0001 | +0.0002 | +0.0003 | +0.0004 |

*NOTES:* 1. 100 ml. of Hercolube (Trade Mark) is used.
2. Antioxidant N-(*alpha*-methylbenzyl)aniline
3. R—38: Reomet-38 (Trade Mark) is used as metal deactivator (a commercially available material from Ciba-Geigy Chemical Co.)

EXAMPLE III

This example dramatically demonstrates that Reomet-38 (Trade Mark) cannot be included in the stabilizing system without incorporating copper either in the form of a soluble salt or in the form of a metal strip, washer, wire, etc. This example further shows how changes in the level of copper while maintaining constant N-(*alpha*-methylbenzyl)aniline and Reomet-38 (Trade Mark) levels effects stabilization. The samples were prepared as in EXAMPLE I.

The data in Table III shows that a stabilizer system containing N-(*alpha*-methylbenzyl)aniline and Reomet-38 (Trade Mark) is ineffective in the absence of copper (Sample A, Table III) in decreasing the amounts of sludge, maintaining low viscosity, low neutralization number, and protecting the metal washers from oxidation. In the absence of copper, Reomet-38 (Trade Mark) functions as a pro-degradant. The data in Table III further shows that increasing amounts of copper above 10 ppm causes the stabilizer system to exhibit a decrease in its efficiency in controlling oxidative breakdown.

TABLE III

| SAMPLE[1] | ANTIOXIDANT[2] (grams) | R—38[3] (grams) | Cu[4] | %/ $V_{100}$ | N.N. | SLUDGE (mg) |
|---|---|---|---|---|---|---|
| A | 2.0 | 0.3 | — | 32.05 | 5.6 | 560.7 |
| B | 2.0 | 0.2 | Washer | 15.66 | 1.58 | 5.7 |
| C | 2.0 | 0.2 | 1 ppm | 12.64 | 0.53 | 19.3 |
| D | 2.0 | 0.2 | 10 ppm | 9.14 | 1.6 | 40.9 |
| E | 2.0 | 0.2 | 30 ppm | 23.15 | 1.7 | 98.5 |
| F | 2.0 | 0.3 | Washer | 7.61 | 1.6 | 6.7 |
| G | 2.0 | 0.3 | 30 ppm | 15.33 | 1.59 | 173.3 |
| H | 2.0 | 0.3 | 200 ppm | 20.8 | 7.61 | 582.2 |

TABLE III (Cont.)

WEIGHT CHANGE (in grams) OF WASHERS

| SAMPLE[1] | Mg | Fe | Cu | Ag |
|---|---|---|---|---|
| A | –0.0594 | +0.0007 | | –0.0001 |
| B | +0.0001 | +0.0001 | –0.0001 | –0.0003 |
| C | +0.0003 | +0.0001 | | +0.0001 |
| D | +0.0003 | +0.0001 | | –0.0001 |
| E | –0.0002 | +0.0002 | | –0.0001 |
| F | 0.0000 | +0.0003 | –0.0001 | –0.0002 |
| G | –0.0116 | +0.0001 | –0.0003 | –0.0002 |
| H | +0.0373 | +0.0001 | –0.0015 | –0.0003 |

*NOTES:* 1. 100 ml. of Hercolube A (Trade Mark) is used.
2. Antioxidant N-(*alpha*-methylbenzyl)aniline.
3. R—38: Reomet-38 (Trade Mark) is used as metal deactivator.
4. Cu: Copper is added as copper naphthenate.

EXAMPLE IV

This example utilizes data presented in Examples I, II and III to demonstrate the essence of the instant invention. See Table IV.

Clearly Sample II—D illustrates that when the amine, a metal deactivator and copper are present, the greatest protection is afforded to the oil. Sample I—B (amine but no copper), Sample I—C (amine and copper) and most dramatically Sample III—A (amine and metal deactivator but no copper) all show decreased protection when compared with II—D where all three components of the instant invention are present in the system.

TABLE IV

| SAMPLE[1] | ANTIOXIDANT[2] (grams) | R—38[3] (grams) | $\%/V_{100}$ | N.N. | SLUDGE (mg) |
|---|---|---|---|---|---|
| A (Table I) | — | — | 94.9** | 26.2 | * |
| B (Table I) | 2.0 | — | 13.68 | 2.7 | 5.1 |
| C (Table I) | 2.0 | — | 18.81 | 2.64 | 19.7 |
| D (Table II) | 2.0 | 0.3 | 7.61 | 1.6 | 6.7 |
| A (Table III) | 2.0 | 0.3 | 32.05 | 5.6 | 560.7 |

TABLE IV (continued)

WEIGHT CHANGE (in grams) OF WASHERS

| SAMPLE[1] | Mg | Fe | Cu | Ag |
|---|---|---|---|---|
| A (Table I) | –0.1366 | –0.0052 | –0.0091 | –0.0001 |
| B (Table I) | –0.0001 | +0.0003 | * | –0.0017 |
| C (Table I) | +0.0001 | +0.0004 | –0.0011 | +0.0001 |
| D (Table II) | 0.0000 | +0.0003 | –0.0001 | –0.0002 |
| A (Table III) | –0.0594 | +0.0007 | * | –0.0001 |

*NOTES:* 1. 100 ml. of Hercolube A (Trade Mark) is used.
2. Antioxidant N-(*alpha*-methylbenzyl)aniline.
3. R—38: Reomet-38 (Trade Mark) is used as metal deactivator. (a commercially available material from Ciba-Geigy Chemical Co.)
* No metal included
** Aged oil was so viscous that it could not be completely filtered to determine the amount of sludge formed. Neutralization number and viscosity of the aged oil is actually the properties of a small sample that could be filtered.

EXAMPLE V

This example demonstrates how the stabilization of a polyolester based lubricating oil is affected by changes in the level of N-(*alpha*-methylbenzyl)aniline while maintaining constant Reomet-38 (Trade Mark) level in the presence of a constant amount of copper metal. The samples were prepared as in EXAMPLE I, using the amounts of ingredients as shown in Table V.

The data in Table V show that when a level of about 2.0 to 3.0 parts of N-(*alpha*-methylbenzyl)-aniline was used together with 0.2 part of Reomet-38 (Trade Mark), a polyolester based lubricating oil is effectively stabilized. The preferred level of N-(*alpha*-methylbenzyl)aniline is shown to be from 2.0 to 2.5 parts.

It can be seen from the results of Table V that the level of the N-(*alpha*-methylbenzyl)aniline is critical in producing polyolester based lubricating oils having outstanding aged physical properties while maintaining Reomet-38 (Trade Mark) at a constant level.

TABLE V

| SAMPLE | OIL[1] | ANTIOXIDANT[2] (grams) | R—38[3] (grams) | % $V_{100}$ | N.N. | SLUDGE (mg) |
|---|---|---|---|---|---|---|
| A | 100 | 1.5 | 0.2 | 23.91 | 5.4 | 694.8 |
| B | 100 | 2.0 | 0.2 | 17.13 | 1.4 | 10.9 |
| C | 100 | 2.2 | 0.2 | 14.03 | 1.1 | 9.5 |
| D | 100 | 2.5 | 0.2 | 18.62 | 1.1 | 10.0 |
| E | 100 | 3.0 | 0.2 | 9.64 | 1.1 | 30.9 |

TABLE V (Cont.)

| | | WEIGHT CHANGE (in grams) OF WASHERS | | | |
|---|---|---|---|---|---|
| SAMPLE | OIL | Mg | Fe | Cu | Ag |
| A | 100 | −0.0521 | +0.0002 | +0.0002 | +0.0001 |
| B | 100 | 0.0000 | 0.0000 | +0.0001 | −0.0001 |
| C | 100 | −0.0001 | 0.0000 | +0.0002 | +0.0001 |
| D | 100 | +0.0001 | +0.0002 | +0.0002 | 0.0000 |
| E | 100 | −0.0026 | +0.0002 | +0.0001 | +0.0002 |

*NOTES:* 1. Oil — Commercially available, polyolester based lubricating oil, Hercolube A (Trade Mark).
2. N-(*alpha*-methylbenzyl)aniline.

EXAMPLE VI

This example demonstrates how various substituted N-benzylanilines effect the stabilization of a polyolester based oil while maintaining a constant Reomet-38 (Trade Mark) level in the presence of a constant amount of copper metal.

Substituted N-benzylanilines were prepared by catalytic hydrogenation of the corresponding Schiff's bases. Five percent Pd/c was used as the catalyst and ethanol was used as the solvent for hydrogenating the Schiff's bases. Schiff's bases, in turn, were prepared by the reaction of the appropriate ketones and anilines in the presence of molecular seives. About 40 grams of molecular sieves (Linde 5A) were added to 1.0 mole of ketone and 1.0 to 1.2 moles of aromatic amine in 200 ml. of benzene; see Kazuo Taguchi and F. H. Westheimer, J. ORG. CHEM. *36.* 1570 (1971). The reaction mixture was refluxed with continuous removal of water until almost no free ketone could be detected in the reaction mixture by I. R. spectroscopy. The mixture was then filtered and the molecular sieves washed with benzene. The filtrate and washings were combined and evaporated to dryness under reduced pressure. The crude product was purified by either crystallization or by vacuum distillation.

The samples were prepared and tested as in EXAMPLE I using the amounts of ingredients as shown in Table VI.

The data in Table VI clearly show that substituted benzylanilines of this invention stabilize polyolester based lubricating oils with respect to oxidative breakdown.

Substitution on the aromatic ring of the benzyl group seems to have little adverse effect.

TABLE VI

EFFECT OF SUBSTITUENTS IN N-BENZYLANILINES

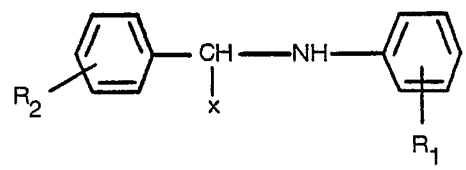

| Run No. | $R_2$ | $R_1$ | X | R—38 (grams) | AGED N.N. | % $V_{100}$ | SLUDGE mg/100 ml |
|---|---|---|---|---|---|---|---|
| 1 | H | $p$-$COOC_2H_5$ | $CH_3$ | 0.2 | 1.6 | 37.96 | 1,096.4 |
| 2 | H | $m$-$COOC_2H_5$ | $CH_3$ | 0.2 | 6.03 | 40.17 | 1,625.0 |
| 3 | H | $p$-$OCH_3$ | $CH_3$ | 0.2 | 5.4 | 32.22 | 1,294.1 |
| 4 | H | $m$-$OCH_3$ | $CH_3$ | 0.2 | 2.2 | 41.84 | 25.2 |
| 5 | H | $o$-$OCH_3$ | $CH_3$ | 0.2 | 7.5 | 39.09 | 146.2 |
| 6 | H | $p$-$C_{12}H_{25}$ | $CH_3$ | 0.2 | 10.0 | 370.61 | 32.0 |
| 7 | H | $p$-Cl | $CH_3$ | 0.2 | 4.3 | 33.49 | 33.1 |
| 8 | H | $m$-Cl | $CH_3$ | 0.2 | 7.7 | 25.81 | 568.3 |
| 9 | H | $o$-Cl | $CH_3$ | 0.2 | 9.8 | 29.30 | 606.9 |
| 10 | $p$-$CH_3$ | H | $CH_3$ | 0.2 | 1.1 | 11.24 | 6.6 |
| 11 | $p$-$CH_3$ | H | $CH_3$ | 0.2 | 3.7 | 29.50 | 13.9 |
| 12 | H | H | $CH_3$ | 0.2 | 1.0 | 17.13 | 6.9 |
| 13 | H | H | $CH_2CH_2CH_3$ | 0.2 | 7.3 | 25.31 | 606.0 |
| 14 | | | | | 26.2 | 94.97 | COULD NOT BE FILTERED |
| 15 | H | $p$-$COOC_{12}H_{25}$ | $CH_3$ | 0.2 | 2.7 | 36.11 | 2.8 |

TABLE VI (Cont.)

| Run No. | Mg | WEIGHT CHANGE (in grams) OF WASHERS Fe | Cu | Ag | Remarks |
|---|---|---|---|---|---|
| 1 | −0.0634 | −0.0002 | −0.0018 | 0.0000 | B |
| 2 | −0.0683 | −0.0002 | −0.0014 | −0.0003 | B |
| 3 | −0.0523 | 0.0000 | −0.0001 | 0.0000 | B |
| 4 | −0.0455 | 0.0000 | −0.0036 | −0.0002 | B |
| 5 | −0.0500 | +0.0010 | −0.0036 | −0.0002 | B |
| 6 | −0.0877 | +0.0001 | −0.0002 | 0.0000 | C |
| 7 | −0.0419 | +0.0001 | −0.0048 | −0.0051 | B |
| 8 | −0.0203 | 0.0000 | −0.0040 | −0.0008 | B |
| 9 | −0.0163 | −0.0012 | −0.0077 | −0.0017 | B |
| 10 | −0.0001 | −0.0030 | −0.0002 | −0.0001 | B |
| 11 | −0.0001 | −0.0004 | −0.0002 | −0.0004 | B |
| 12 | −0.0001 | −0.0002 | −0.0001 | −0.0001 | B |
| 13 | −0.0620 | −0.0002 | −0.0002 | −0.0001 | B |
| 14 | −0.1366 | −0.0052 | −0.0091 | −0.0001 | A |
| 15 | 0.0000 | −0.0001 | −0.0007 | −0.0002 | D |

*NOTES:* A. No antioxidant is used. In other experiments, with the exception of Run 14, 2.0 g of substituted N-benzylaniline is used.
B. Hercolube A (Trade Mark) (100 ml) is used for each test.
C. Hercolube A (Trade Mark) (50 ml) is used for this test.
D. 3.5 g of the antioxidant is used.

EXAMPLE VII

A preferred embodiment of this invention involves alkylation in the benzyl ring and/or the aniline ring of the parent *alpha*-methyl benzyl aniline. This is beneficial in that it results in decreased volatility of the parent compound. Thus, such compounds have the formula

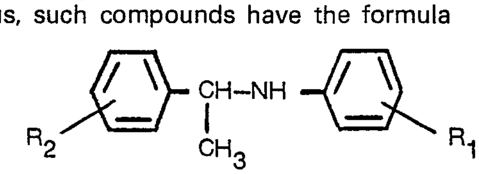

where $R_1$ is H, a $C_4$ to $C_{12}$ alkyl group, preferably in the *para*-position and $R_2$ is H, or a $C_1$ to $C_{12}$ alkyl group which may or may not be branched, and provided that $R_1$ and $R_2$ are not simultaneously both hydrogen.

TABLE VII

| SAMPLE[1] | ANTIOXIDANT[2] (grams) | R—38[3] (grams) | %/$V_{100}$ | N.N. | SLUDGE (mg) |
|---|---|---|---|---|---|
| A | 2.5 | 0.2 | 20.8 | 3.5 | 16.7 |
| B | 3.0 | 0.2 | 25.2 | 2.6 | 13.9 |
| C | 3.5 | 0.2 | 16.4 | 1.5 | 5.7 |

TABLE VII (Cont.)

| SAMPLE[1] | WEIGHT CHANGE (in grams) OF WASHERS Mg | Fe | Cu | Ag |
|---|---|---|---|---|
| A | +0.0001 | +0.0002 | −0.0006 | 0.0000 |
| B | +0.0001 | +0.0002 | −0.0004 | −0.0001 |
| C | 0.0000 | +0.0002 | 0.0000 | 0.0000 |

*NOTES:* 1. 100 ml. of Hercolube A (Trade Mark) is used.
2. Antioxidant N-(*alpha*-methyl-*p*-octyl)benzylaniline.
3. R—38: Reomet-38 (Trade Mark) is used as metal deactivator.

## EXAMPLE VIII

This example shows how phenylated- *alpha*-tetralylamine affects the stabilization of a polyolester based lubricating oil.

The phenylated- *alpha*-tetralylamines were prepared according to the procedure described in EXAMPLE VI.

The samples were prepared as in Example I using the amounts of ingredients as shown in Table VIII.

The data in Table VIII shows that the addition of phenylated- *alpha*-tetralylamine, a metal deactivator and copper or a copper salt to a polyolester lubricating oil such as Hercolube A (Trade Mark) stabilizes the said oil against oxidative breakdown.

TABLE VIII

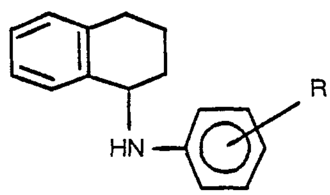

| Run No. | R | R—38 (grams) | A.O. (grams) | OIL | CHANGE in N.N. | % $V_{100}$ | SLUDGE (in mg) |
|---|---|---|---|---|---|---|---|
| 1 | H | 0.2 | 2.5 | 100 | 5.3 | 24.51 | 34.3 |
| 2 | H | 0.5 | 2.0 | 100 | 3.7 | 32.31 | 49.7 |
| 3 | H | 0.2 | 2.0 | 100 | 3.7 | 27.70 | 29.6 |
| 4 | H | 0.5 | 1.5 | 100 | 12.1 | 40.38 | 36.6 |
| 5 | H | 0.5 | 1.0 | 100 | 10.4 | 39.57 | 38.9 |
| 6 | H | 0.5 | 3.0 | 100 | 3.2 | 33.23 | 275.9 |
| 7 | p-$C_{12}H_{25}$ | 0.5 | 1.0 | 100 | 6.2 | 65.50 | 1,964.2 |
| 8 | p-$C_{12}H_{25}$ | 0.5 | 2.0 | 100 | 8.4 | 44.88 | 21.9 |
| 9 | p-$C_{12}H_{25}$ | 0.5 | 3.5 | 100 | 5.4 | 30.06 | 14.9 |
| 10 | p-$OCH_3$ | 0.5 | 0.9 | 100 | 13.0 | 29.75 | 5,504.2 |
| 11 | p-$COOC_2H_5$ | 0.5 | 2.0 | 100 | 4.4 | 28.42 | 7.0 |
| 12 | — | 0 | 0 | 100 | 16.7 | 39.57 | * |

TABLE VIII (Cont.)

| Run No. | WEIGHT CHANGE (in grams) OF WASHERS Mg | Fe | Cu | Ag |
|---|---|---|---|---|
| 1 | 0.0000 | +0.0001 | +0.0002 | +0.0001 |
| 2 | +0.0003 | +0.0004 | +0.0003 | +0.0001 |
| 3 | +0.0003 | +0.0004 | +0.0004 | +0.0002 |
| 4 | +0.0002 | +0.0006 | +0.0001 | +0.0002 |
| 5 | +0.0002 | +0.0005 | 0.0000 | +0.0002 |
| 6 | +0.0008 | +0.0012 | +0.0030 | +0.0005 |
| 7 | −0.9870 | +0.0002 | +0.0001 | +0.0002 |
| 8 | +0.0002 | +0.0002 | +0.0002 | −0.0003 |
| 9 | +0.0003 | +0.0003 | +0.0006 | +0.0004 |
| 10 | −0.0017 | −0.0017 | −0.0002 | +0.0004 |
| 11 | +0.0001 | +0.0001 | +0.0001 | +0.0001 |
| 12 | −0.1000 | −0.0020 | −0.0495 | −0.0001 |

*NOTE:* * Too viscous to filter. N.N. and viscosity were taken on a few milliliters.

EXAMPLE IX

To 100 parts of polydecene synthetic hydrocarbon oil is added 2.0 parts of 1-(p-dodecylanilino)-1,2,3,4-tetrahydronaphthalene and 0.5 part Reomet 38 (Trade Mark). Oxidative testing of the oil as described in Example II—E show that the above combination effectively protects synthetic hydrocarbon oils against oxidative breakdown.

EXAMPLE X

To 100 parts of mineral oil is added 2.0 parts of N-(*alpha*-methylbenzyl)-aniline and 0.5 parts Reomet 38 (Trade Mark) as in Example II.E. The resulting blend is found also to exhibit excellent antioxidant properties when an aging test is performed at elevated temperatures.

EXAMPLE XI

To 100 parts of polyoctene synthetic hydrocarbon oil is added 2.0 parts of N-(*alpha*-methylbenzyl)aniline and 0.5 parts Reomet 38 (Trade Mark) as in Example II.E. The resulting blend is found to exhibit excellent antioxidant properties when an aging test is performed at elevated temperatures.

EXAMPLE XII

To 100 parts of polydecane synthetic hydrocarbon oil is added 2.0 parts of N-(*alpha*-methylbenzyl)aniline and 0.5 parts Reomet 38 (Trade Mark) as in Example II.E. The resulting blend exhibits excellent antioxidant properties when aging is performed at elevated temperatures.

EXAMPLE XIII

To 100 parts of a blend of 25 parts polyoctene and 75 parts trimethylol propane triheptanoate synthetic ester fluid is added 2.0 parts of N-(*alpha*-methylbenzyl) aniline and 0.5 parts Reomet 38 (Trade Mark) as in Example II.E. The resulting blend possesses excellent antioxidant properties when aging is performed at elevated temperatures.

EXAMPLE XIV

To 100 parts of a blend of 50 parts of polyoctene and trimethylol propane triheptanoate synthetic ester fluid is added 2.0 parts of N-(*alpha*-methylbenzyl)aniline and 0.5 parts Reomet 38 (Trade Mark) as in Example II.E. The resulting blend is found to exhibit excellent antioxidant properties when aging is performed at elevated temperatures.

**Claims**

1. A method for stabilizing a lubricating oil which comprises utilizing as a stabilizer system:
(A) An amine compound of the general formula

(I) 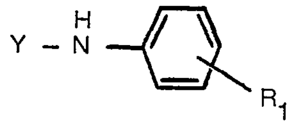

wherein Y is

(II) 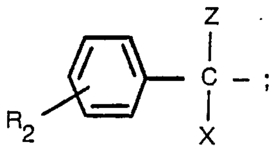 or 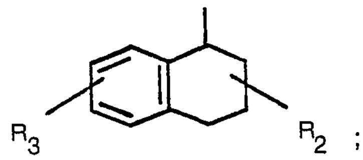 (III)

wherein $R_1$ and $R_3$ are each independently selected from the group consisting of H, $C_1$—$C_{12}$ alkyl, $C_1$—$C_{12}$ alkoxy, $C_2$—$C_{18}$ alkoxycarbonyl, halogen and nitro; $R_2$ is selected from the group consisting of H, $C_1$—$C_{12}$ alkyl, $C_1$—$C_{12}$ alkoxy, $C_2$—$C_{18}$ alkoxycarbonyl, halogen, nitro and amino; Z and X are selected from H or $C_1$—$C_3$ alkyl, provided, however, that both Z and X are not simultaneously H;
(B) A metal deactivator, and,
(C) A metal or metal salt being soluble in the lubricating oil.

2. The method according to claim 1 wherein the lubricating oil is a polyolester fluid.

3. The method according to claim 1 wherein the lubricating oil is a synthetic hydrocarbon oil.

4. The method according to claim 1 wherein the lubricating oil is a mineral oil.

5. The method according to claim 1 wherein the lubricating oil is a blend of a synthetic hydrocarbon oil and a polyolester fluid.

6. The method according to claim 1 wherein Y is

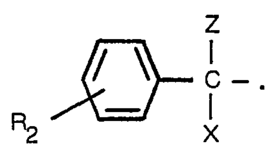

7. The method according to claim 6 wherein $R_2$ is hydrogen; X is methyl and Z is H.

8. The method according to claims 1 and 7, wherein $R_1$ is a methoxy group in the ortho, meta or para position.

9. The method according to claims 1 and 7, wherein $R_1$ is a —$COOC_2H_5$ radical in the meta or para position.

10. The method of claims 1 and 7, wherein $R_1$ is a —$C_{12}H_{25}$ radical in the para position.

11. The method according to claim 6, wherein $R_2$ is —Cl in the ortho, meta or para position; X is methyl and Z is H.

12. The method according to claim 6, wherein $R_2$ is p-methyl.

13. The method according to claims 1 and 6, wherein $R_1$ is H; $R_2$ is selected from the group consisting of H, $C_1$—$C_{12}$ alkyl, $C_1$—$C_{12}$ alkoxy, $C_2$—$C_{18}$ alkoxycarbonyl, halogen, nitro and amino; X is methyl and Z is H or $C_1$—$C_3$ alkyl.

14. The method according to claim 12, wherein $R_2$ is para methoxy or —$C_8H_{17}$.

15. The method according to claims 1 and 6, wherein $R_1$, $R_2$ and Z are hydrogen and X is propyl.

16. The method according to claim 1 wherein Y is

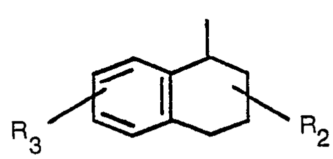

17. The method according to claim 16, wherein $R_2$ and $R_3$ are hydrogen.

18. The method according to claim 1 and 17 wherein $R_1$ is H.

19. The method according to claim 16 wherein $R_2$ is H and $R_3$ is 4-methoxy, 4-$C_{12}H_{25}$ or 4-$COOC_2H_5$.

20. The method according to claim 1 wherein the metal deactivator is a benzotriazole derivative.

21. The method according to claim 1 wherein the metal compound is copper or copper naphthenate.

**Patentansprüche**

1. Verfahren zum Stabilisieren eines Schmieröls, bei dem als Stabilisatorsystem (A) eine Aminverbindung der allgemeinen Formel

(I) 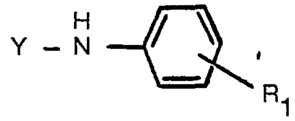 ,

worin Y

(II) 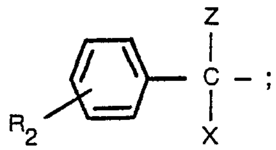 ; oder 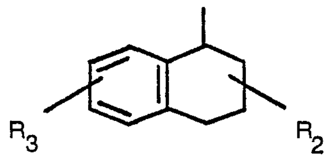 ; (III)

ist und worin $R_1$ und $R_3$ jeweils unabhängig voneinander aus der aus H, $C_1$- bis $C_{12}$-Alkylgruppen, $C_1$- bis $C_{12}$-Alkoxygruppen, $C_2$- bis $C_{18}$-Alkoxycarbonylgruppen, Halogen und der Nitrogruppe bestehenden Gruppe ausgewählt sind, $R_2$ aus der aus H, $C_1$- bis $C_{12}$-Alkylgruppen, $C_1$- bis $C_{12}$-Alkoxygruppen, $C_2$- bis $C_{18}$-Alkoxycarbonylgruppen, Halogen, der Nitro- und der Aminogruppe bestehenden Gruppe ausgewählt ist und Z und X aus H oder $C_1$- bis $C_3$-Alkylgruppen ausgewählt sind, wobei jedoch vorausgesetzt ist, daß Z und X nicht gleichzeitig H bedeuten.

(B) ein Metalldesaktivator und

(C) ein in dem Schmieröl lösliches Metall oder Metallsalz

verwendet werden.

2. Verfahren nach Anspruch 1, bei dem das Schmieröl ein Polyolester-Fluid ist.

3. Verfahren nach Anspruch 1, bei dem das Schmieröl ein synthetisches Kohlenwasserstofföl ist.

4. Verfahren nach Anspruch 1, bei dem das Schmieröl ein Mineralöl ist.

5. Verfahren nach Anspruch 1, bei dem das Schmieröl eine Mischung eines synthetischen Kohlenwasserstofföls und eines Polyolester-Fluids ist.

6. Verfahren nach Anspruch 1, bei dem Y

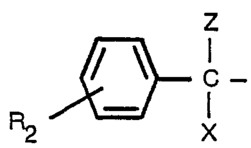 ist.

7. Verfahren nach Anspruch 6, bei dem $R_2$ Wasserstoff ist, X eine Methylgruppe ist und Z H ist.

8. Verfahren nach den Ansprüchen 1 und 7, bei dem $R_1$ eine Methoxygruppe in der ortho-, meta- oder para-Stellung ist.

9. Verfahren nach den Ansprüchen 1 und 7, bei dem $R_1$ ein Rest $—COOC_2H_5$ in der meta- oder para-Stellung ist.

10. Verfahren nach den Ansprüchen 1 und 7, bei dem $R_1$ ein Rest $—C_{12}H_{25}$ in der para-Stellung ist.

11. Verfahren nach Anspruch 6, bei dem $R_2$ —Cl in der ortho-, meta- oder para-Stellung ist, X eine Methylgruppe ist und Z H ist.

12. Verfahren nach Anspruch 6, bei dem $R_2$ eine p-Methylgruppe ist.

13. Verfahren nach den Ansprüchen 1 und 6, bei dem $R_1$ H ist, $R_2$ aus der aus H, $C_1$- bis $C_{12}$-Alkylgruppen, $C_1$- bis $C_{12}$-Alkoxygruppen, $C_2$- bis $C_{18}$-Alkoxycarbonylgruppen, Halogen, der Nitro- und der Aminogruppe bestehenden Gruppe ausgewählt ist, X eine Methylgruppe ist und Z H oder eine $C_1$- bis $C_3$-Alkylgruppe ist.

14. Verfahren nach Anspruch 13, bei dem $R_2$ eine para-Methoxygruppe oder $—C_8H_{17}$ ist.

15. Verfahren nach den Ansprüchen 1 und 6, bei dem $R_1$, $R_2$ und Z Wasserstoff bedeuten und X eine Propylgruppe ist.

16. Verfahren nach Anspruch 1, bei dem Y

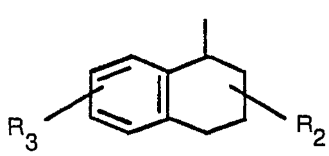 ist.

17. Verfahren nach Anspruch 16, bei dem $R_2$ und $R_3$ Wasserstoff bedeuten.

18. Verfahren nach den Ansprüchen 1 und 17, bei dem $R_1$ H ist.

19. Verfahren nach Anspruch 16, bei dem $R_2$ H ist und $R_3$ eine 4-Methoxygruppe, 4-$C_{12}H_{25}$ oder 4-$COOC_2H_5$ ist.

20. Verfahren nach Anspruch 1, bei dem der Metalldesaktivator ein Benzotriazolderivat ist.

21. Verfahren nach Anspruch 1, bei dem das Metall oder das Metallsalz Kupfer oder Kupfernaphthenat ist.

**Revendications**

1. Procédé de stabilisation d'une huile de lubrification qui consiste à utiliser comme système stabilisant:

(A) un composé d'amine de formule générale

(I) 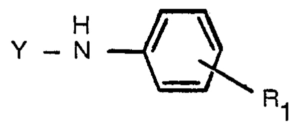

où Y est

(II) 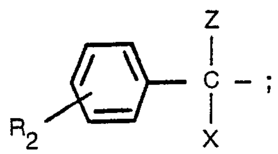 ou 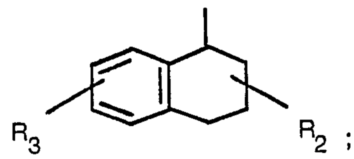 (III)

où chacun de $R_1$ et $R_3$ est indépendemment choisi dans le groupe consistant en H, alkyl $C_1$—$C_{12}$, alkoxy $C_1$—$C_{12}$, alkoxycarbonyl $C_2$—$C_{18}$, halogène et nitro; $R_2$ est choisi dans le groupe consistant en H, alkyl $C_1$—$C_{12}$, alkoxy $C_1$—$C_{12}$, alkoxycarbonyl $C_2$—$C_{18}$, halogène, nitro et amino; Z et X sont choisis parmi H ou un alkyl $C_1$—$C_3$, à condition cependant que Z et X ne soient pas simultanément H;

(B) un désactivateur de métal; et

(C) un métal ou un sel de métal soluble dans l'huile de lubrification.

2. Procédé selon la revendication 1 où l'huile de lubrification est un polyolester fluide.

3. Procédé selon la revendication 1 où l'huile de lubrification est une huile d'hydrocarbure synthétique.

4. Procédé selon la revendication 1 où l'huile de lubrification est une huile minérale.

5. Procédé selon la revendication 1 où l'huile de lubrification est un mélange d'une huile d'hydrocarbure synthétique et d'un polyolester fluide.

6. Procédé selon la revendication 1 où Y est

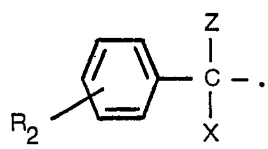

7. Procédé selon la revendication 6 où $R_2$ est de l'hydrogène; X est du méthyle et Z est H.

8. Procédé selon les revendications 1 et 7, où $R_1$ est un groupe méthoxy en position ortho, méta ou para.

9. Procédé selon les revendications 1 et 7 où $R_1$ est un radical —$COOC_2H_5$ en position méta ou para.

10. Procédé selon les revendications 1 et 7, où $R_1$ est un radical —$C_{12}H_{25}$ en position para.

11. Procédé selon la revendication 6, où $R_2$ est —Cl en position ortho, méta ou para; X est méthyle et Z est H.

12. Procédé selon la revendication 6 où $R_2$ est p-méthyle.

13. Procédé selon les revendications 1 et 6, où $R_1$ est H; $R_2$ est choisi dans le groupe consistant en H, alkyl $C_1$—$C_{12}$, alkoxy $C_1$—$C_{12}$, alkoxycarbonyl $C_2$—$C_{18}$, halogène, nitro et amino; X est méthyle et Z est H ou alkyl $C_1$—$C_3$.

14. Procédé selon les revendication 12, où $R_2$ est para méthoxy ou —$C_8H_{17}$.

15. Procédé selon les revendications 1 et 6, où $R_1$ $R_2$ et Z sont hydrogène et X est propyle.

16. Procédé selon la revendication 1 où Y est

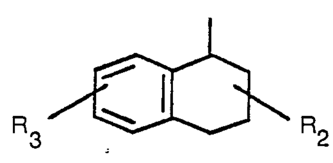

17. Procédé selon la revendication 16 où $R_2$ et $R_3$ sont de l'hydrogène.
18. Procédé selon la revendication 1 et 17 où $R_1$ est H.
19. Procédé selon la revendication 16 où $R_2$ est H et $R_3$ est 4-méthoxy, 4-$C_{12}H_{25}$ ou 4-$COOC_2H_5$.
20. Procédé selon la revendication 1 où le désactivateur de métal est un dérivé de benzotriazole.
21. Procédé selon la revendication 1 où le composé de métal est du cuivre ou du naphthénate de cuivre.